Europäisches Patentamt

(19) European Patent Office

Office européen des brevets

(11) Publication number: **0 205 269**
**B1**

(12) EUROPEAN PATENT SPECIFICATION

(45) Date of publication of the patent specification:
**11.10.89**

(21) Application number: **86303941.8**

(22) Date of filing: **23.05.86**

(51) Int. Cl.⁴: **B60R 1/06**

(54) Remote-control rearview mirror.

(30) Priority: **07.06.85 GB 8514501**

(43) Date of publication of application:
**17.12.86 Bulletin 86/51**

(45) Publication of the grant of the patent:
**11.10.89 Bulletin 89/41**

(84) Designated Contracting States:
**DE FR GB**

(56) References cited:
**DE-A- 2 721 004**

(73) Proprietor: **BRITAX (WINGARD) LIMITED, Chandler Road, Chichester West Sussex PO19 2UG(GB)**

(72) Inventor: **Bottrill, John, "Moelfre" 9 Langdale Avenue, Chichester West Sussex(GB)**

(74) Representative: **Hollinghurst, Antony, Britax Limited Patent Department, Chichester West Sussex PO19 2AQ(GB)**

## Description

This invention relates to a rearview mirror for a vehicle of the type having a housing having a reflective member mounted therein, a bracket comprising a base portion adapted to be secured to a motor vehicle body, a hollow cylindrical formation, with a radially inwardly extending flange at one end and a radially outwardly extending flange at its other end connecting the cylindrical formation to the base portion; an inner friction ring guided for angular movement relative to the bracket about the axis of the cylindrical formation, adapted to engage with the inwardly extending flange; an outer friction ring guided for angular movement relative to the bracket about the axis of the cylindrical formation; a control member secured to a control lever which is adapted to project into the interior of the vehicle to permit adjustment of the orientation of the housing relative to the bracket: and resilient means for urging the control member towards the housing thereby to urge each projection into engagement with its respective flange. A rearview mirror of this type is disclosed in DE-A 2 721 004.

According to the invention, in a rearview mirror of the type described above, the inner friction ring has a pair of diametrically opposed mutually aligned recesses in the surface facing away from the inwardly extending flange, the outer friction ring is adapted to engage with the outwardly extending flange and has a pair of diametrically opposed mutually aligned recesses in the surface facing away from said flange, the control member has first and second projections arranged to be urged by the resilient means into respective recesses in one of the friction rings, third and fourth projections on the housing are arranged to be urged by the resilient means into respective recesses in the other of the friction rings, and at least one of the mutually engaging surfaces of each projection and the corresponding recess is of party-cylindrical cross-section oriented so that, when the projections are engaged in their respective recesses, all particylindrical surfaces have a common axis perpendicular to the axis of the cylindrical formation, whereby the control member and the housing are simultaneously angularly movable both about said common axis and about the axis of the cylindrical formation.

The means for resiliently coupling the control member to the housing may comprise a stem secured to the housing and projecting through the cylindrical formation and an opening in the control member, together with a compression spring engaging between the control member and a flange on the free end of the stem.

An embodiment of the invention will now be described, by way of example, with reference to the accompanying drawings in which:

Figure 1 is a top plan view of a rearview mirror in accordance with the invention;

Figure 2 is a partially broken away elevation view of the mirror shown in Figure 1;

Figure 3 is a partially broken away perspective view of the mechanism of the embodiment shown in Figures 1 and 2; and

Figure 4 is a partially broken away exploded perspective view of the mechanism shown in Figure 3.

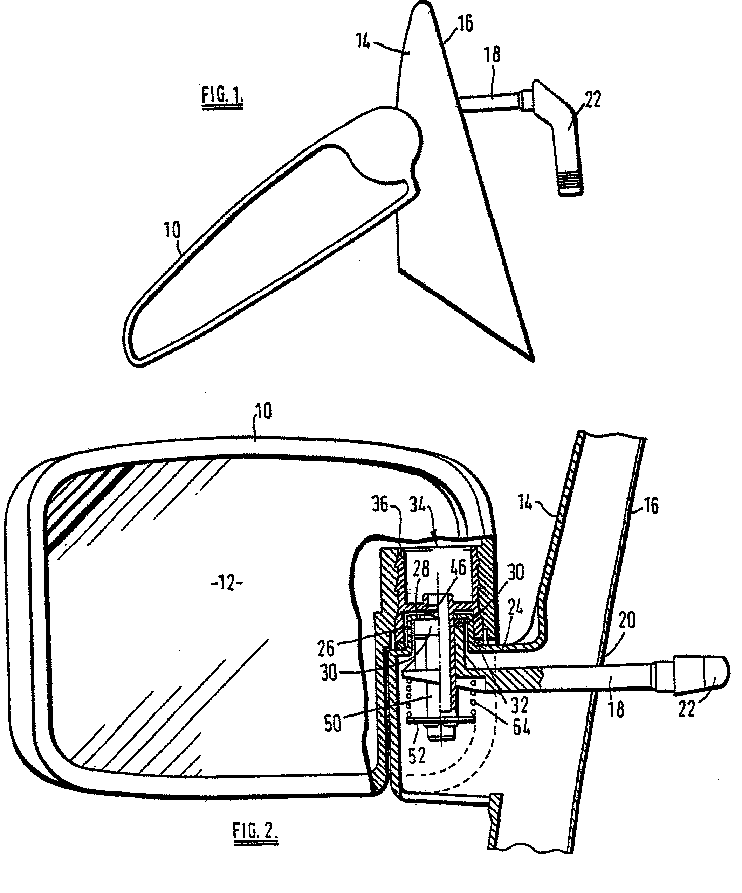

Referring to Figures 1 and 2, a rearview mirror assembly in accordance with the invention comprises a housing 10 containing a reflective member 12 and mounted on a bracket 14 which is adapted to be mounted on a motor vehicle with a face 16 abutting an adjacent vehicle body panel. An operating lever 18 projects through a slot 20 in the surface 16 and has a cranked handle 22 on its end. The slot 20 extends perpendicular to the plane of the drawing in Figure 2, i.e. horizontally.

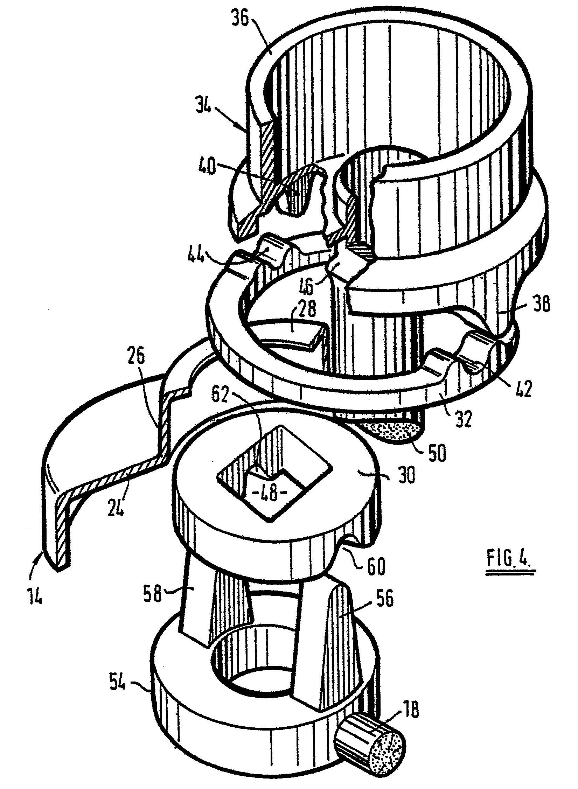

Turning now to Figures 2, 3 and 4, the bracket 14 has a horizontally extending flange 24 containing a circular opening with a cylindrical formation 26 projecting upwardly from its periphery. The cylindrical formation 26 has an annular flange 28 extending radially inwardly from its upper edge. An inner friction ring 30 engages with the lower surface of the flange 28 inside the cylindrical formation 26. Similarly, an outer friction ring 32 engages with the upper surface of the flange 24 outside the cylindrical formation 26.

A mounting insert 34 has an upwardly extending cylindrical flange 36 which is bonded to the interior of the housing 10. The insert 34 also has two downwardly extending projections 38 and 40, the bottoms of which are of semi-cylindrical cross-section with their axes aligned with one another. The projections 38 and 40 engage in respective correspondingly shaped recesses 42 and 44 in the upper surface of the outer friction ring 32. In addition, the insert 34 has a portion 46 of square cross-section which projects through the circular opening in the flange 28 and engages in a square opening 48 in the inner friction ring 30 so as to couple the friction ring 30 to the housing 10. A horizontal cylindrical stem 50 extends downwardly from the square portion 46 of the insert 34 and has a flange 52 (Figure 2) secured to its lower end.

An annular control member 54, fast with the lever 18, surrounds the stem 52. The control member 54 carries two upwardly extending projections 56 and 58, the upper ends of which are of part-cylindrical shape and engage in correspondingly shaped recesses 60 and 62 in the inner friction ring 30. The orientation of th recesses 60 and 62 relative to the square opening 48 in the inner friction ring 30 is such that their common axis is coincident with the common axis of the cylindrical surfaces of the projections 38 and 40 on the mounting insert 34. A compression spring 64 (Figure 2) engages between the flange 52 on the stem 50 and the underside of the control member 54 so as to urge the projections 56 and 58 into the recesses 60 and 62, the friction ring 30 into engagement with the flange 28, the flange 24 into engagement with the outer friction ring 32 and the projections 38 and 40 into engagement with the recesses 42 and 44.

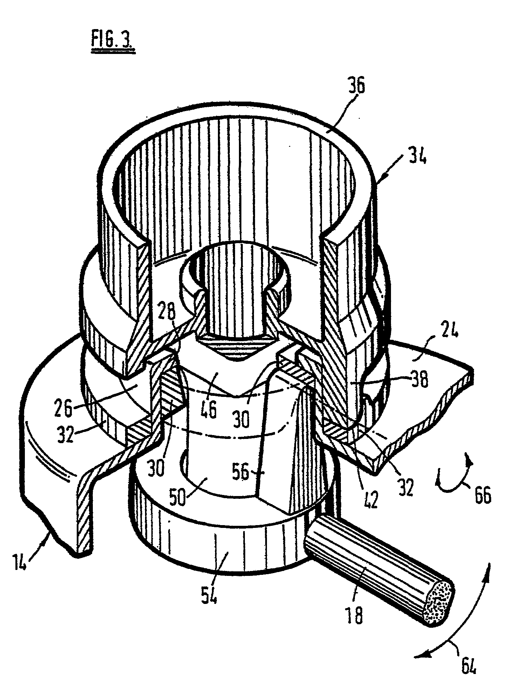

When it is desired to adjust the horizontal orientation of the housing 10 relative to the mounting bracket 12, the handle 22 is used to move the lever 18 horizontally, as illustrated by the arrow 64 (Figure 3). The control member 64 pivots about the axis of the cylindrical stem 50, the projections 56 and 58 moving the inner friction ring 30, which, in turn, moves the mounting insert 34 via its square portion 46, so that the projections 38 and 40 move the outer friction ring 32. After completion of such movement, the housing 10 is held in its desired position by the friction between the friction rings 30 and 32 and their respective flanges 28 and 24, under the action of the compression spring 64.

When it is desired to adjust the vertical orientation of the housing 10, the handle 22 is moved to pivot the control member 54 about the axis of the projections 56 and 58, as indicated by the arrow 66 in Figure 3. As already mentioned, this axis is also the axis of the cylindrical surfaces of the other two projections 38 and 40 on the mounting insert 34 and consequently this pivoting movement is transmitted to the insert 34 by engagement of the control member 54 with the cylindrical stem 50. When the required orientation has been achieved, it is maintained by the friction between the cylindrical surfaces of the four projections 38, 40, 56 and 58 and the corresponding recesses 42, 44, 60 and 62 in the two friction rings 30 and 32.

In the event that the housing 10 is subject to impact tending to displace it horizontally relative to the bracket 14, the lever 18 first moves until it abuts against the end of the slot 20 (Figure 2). Further displacement of the housing 10 causes the projections 56 and 58 to disengage from their respective recesses 60 and 62 in the friction ring 30, allowing the insert 34 to turn relative to the control member 54, thus permitting the housing 10 to fold against the part of the vehicle body on which it is mounted. The other two projections 38 and 40 on the insert 34 remain in engagement with the recesses 42 and 44 in the outer friction ring 32 which thus continues to move with the housing 10. When the housing 10 is moved back manually, the projections 56 and 58 snap back into their respective recesses 60 and 62 in the inner friction ring 30.

## Claims

1. A rearview mirror for a motor vehicle comprising a housing (10) having a reflective member (12) mounted therein, a bracket (14) comprising a base portion adapted to be secured to a motor vehicle body, a hollow cylindrical formation (26), with a radially inwardly extending flange (28) at one end and a radially outwardly extending flange (24) at its other end connecting the cylindrical formation (26) to the base portion; an inner friction ring (30) guided for angular movement relative to the bracket (14) about the axis of the cylindrical formation (26), adapted to engage with the inwardly extending flange (28); an outer friction ring (32) guided for angular movement relative to the bracket (14) about the axis of the cylindrical formation (26); a control member (54) secured to a control lever (18) which is adapted to project into the interior of the vehicle to permit adjustment of the orientation of the housing (10) relative to the bracket (14); and resilient means (64) for urging the control member (54) towards the housing (10) thereby to urge each projection into engagement with its respective flange; characterised in that:

the inner friction ring has a pair of diametrically opposed mutually aligned recesses (60, 62) in the surface facing away from the inwardly extending flange (28);

the outer friction ring (32) is adapted to engage with the outwardly extending flange (24) and has a pair of diametrically opposed mutually aligned recesses (42, 44) in the surface facing away from said flange (24);

the control member (54) has first and second projections (56, 58) arranged to be urged by the resilient means (64) into respective recesses (60, 62) in one of the friction rings (30);

third and fourth projections (38, 40) on the housing (10) are arranged to be urged by the resilient means (64) into respective recesses (42, 44) in the other of the friction rings (32); and

at least one of the mutually engaging surfaces of each projection and the corresponding recess is of partcylindrical cross-section oriented so that, when the projections (38, 40, 56, 58) are engaged in their respective recesses (42, 44, 60, 62), all such partcylindrical surfaces have a common axis perpendicular to the axis of the cylindrical formation (26), whereby the control member (54) and the housing (10) are simultaneously angularly movable both about said common axis and about the axis of the cylindrical formation (26).

2. A rearview mirror according to claim 1, wherein the bracket (14) is coupled for simultaneous angular movement about the axis of the cylindrical formation (26) to the friction ring (32) whose the recesses (42, 44) are engaged by the projections (38, 40) on the mirror housing (10).

3. A rearview mirror according to claim 1, wherein of the mirror housing (10) is coupled for simultaneous angular movement about the axis of the cylindrical formation (26) to the friction ring (30) whose the recesses (60, 62) are engaged by the projections (56, 58) on the control member (54).

4. A rearview mirror according to claim 3, wherein the inner friction ring (30) has a central hole (48) of non-circular cross-section in which engages a complementary non-circular formation (46) on the housing (10).

5. A rearview mirror according to any preceding claim, wherein the means for resiliently coupling the control member (54) to the housing (10) comprises a stem (50) secured to the housing (10) and projecting through the cylindrical formation (26) and an opening in the control member (54), together with a compression spring (64) engaging between the control member (54) and a flange (52) on the free end of the stem (50).

## Patentansprüche

1. Rückblickspiegel für ein Kraftfahrzueg mit einem Gehäuse (10) mit einem Spiegelnden Bauteil (12), das darin montiert ist, einem Träger (14) mit einem Basisabschnitt, der angepasst ist an einer Kraftfahrzeugkarosserie befestigt zu sein, einem hohlen zylindrischen Gebilde (26) mit einem sich radial nach innen ausdehnenden Flansch (28) an einem Ende und einem sich radial nach aussen ausdehnenden Flansch (24) an seinem anderen Ende, der das zylindrische Gebilde (26) mit dem Basisabschnitt verbindet; einem inneren Reibungsring (30), der zur Winkelbewegung relativ zum Träger (14) um die Achse des zylindrischen Gebildes (26) geführt ist und angepasst ist mit dem sich nach innen ausdehnenden Flansch (28) in Eingriff zu stehen; einem äusseren Reibungsring (32), der zur Winkelbewegung relativ zum Träger (14) um die Achse des zylindrischen Gebildes (26) geführt ist; einem Steuerteil (54), das an einem Stellhebel (18) befestigt ist, der angepaßt ist in das Innere des Fahrzeuges hineinzuragen, um die Verstellung der Ausrichtung des Gehäuses (10) relativ zum Träger (14) zuzulassen; und einer elastischen Einrichtung (64), um das Teuerteil (54) in Richtung des Gehäuses (10) zu drücken, wodurch jeder Ansatz mit seinem jeweiligen Flansch in Eingriff kommt; dadurch gekennzeichnet, daß der innere Reibungsring ein Paar diametral entgegengesetzte, beidseitig ausgerichtete Vertiefungen (60, 62) in der Oberfläche, die von dem sich nach innen ausdehnenden Flansch (28) wegzeigt, aufweist, der äussere Reibungsring (32) angepaßt ist, um mit dem sich nach außen ausdehnenden Flansch (24) in Eingriff zu stehen, und ein Paar diametral entgegengesetzte, beidseitig ausgerichtete Vertiefungen (42,44) in der Oberfläche, die von dem Flansch (24) wegzeigt, aufweist; das Steuerteil (54) erste und zweite Ansätze (56,58) aufweist, die so angeordnet sind, daß sie durch die elastische Einrichtung (64) in jeweilige Vertiefungen (60,62) in einem der Reibungsringe (30) gedrückt werden; dritte und vierte Ansätze (38,40) in dem Gehäuse (10) so angeordnet sind, daß sie durch die elastische Einrichtung (64) in jeweilige Vertiefungen (42,44) in dem anderen der Reibungsringe (32) gedrückt werden; und minestens eine der wechselseitig eingreifenden Oberflächen jedes Ansatzes und der entsprechenden Vertiefung einen teilweise zylindrischen Querschnitt aufweist, der so ausgerichtet ist, daß, wenn die Ansätze (38, 40, 56,58) in ihren jeweiligen Vertiefungen (42, 44, 60, 62) eingreifen, alle solchen teilweise zylindrischen Oberflächen eine zur Achse des zylindrischen Gebildes (26) senkrechte gemeinsame Achse aufweisen, wobei das Steuerteil (54) und der Rahmen (10) gleichzeitig winkelbewegbar sind, sowohl um die gemeinsame Achse als auch um die Achse des zylindrischen Gebildes (26).

2. Rückblickspiegel nach Anspruch 1, worin der Träger (14) zur gleichzeitigen Winkelbewegung um die Achse des zylindrischen Gebildes (26) mit dem Reibungsring (32), dessen Vertiefung (42,44) mit den Ansätzen (38,40) auf dem Spiegelgehäuse (10) in Eingriff sind, verbunden ist.

3. Rückblickspiegel nach Anspruch 1, worin das Spiegelgehäuse (10) zur gleichzeitigen Winkelbewegung um die Achse des zylindrischen Gebildes (26) mit dem Reibungsring (30), dessen Vertiefung (60,62) mit den Ansätzen (56,58) des Steuerteils (54) in Eingriff sind, verbunden ist.

4. Rückblickspiegel nach Anspruch 3, worin der innere Reibungsring (30) ein zentrales Loch (48) nicht kreisförmigen Querschnitts aufweist, in das ein komplementäres nicht kreisförmiges Gebilde (46) des Gehäuses (10) eingreift.

5. Rückspiegel nach einem der vorhergehenden Ansprüche, worin die Einrichtung zur elastischen Verbindung des Steuerteils (54) mit dem Gehäuse (10) einen Stab (50) umfaßt, der an dem Gehäuse (10) befestigt ist und durch das zylindrische Gebilde (26) und eine Öffnung in dem Steuerteil (54) hindurchragt, die miteinander mit einer Druckfeder (64) zwischen dem Steuerteil (54) und einem Flansch (52) am freien Ende des Stabes (50) in Eingriff sind.

**Revendications**

1. Rétroviseur pour véhicule automobile comprenant un boîtier (10) muni d'un élément réflecteur (12) monté à l'intérieur, un support (14) comprenant une partie en forme d'embase, agencée pour être fixée sur une carrosserie de véhicule automobile, une formation cylindrique creuse (26) munie d'une bride s'étendant radialement vers l'intérieur (28) à une extrémité et d'une bride dirigée radialement vers l'extérieur (24) à son autre extrémité, reliant la formation cylindrique (26) à la partie en forme d'embase; une bague de friction intérieure (30) guidée pour effectuer un mouvement agulaire par rapport au support (14) autour de l'axe de la formation cylindrique (26), agencée pour venir en contact avec la bride dirigée vers l'intérieur (28); une bague de friction extérieure (32) guidée pour effectuer un mouvement angulaire par rapport au support (14) autour de l'axe de l'assemblage cylindrique (26); un organe de commande (54) fixé à un levier de commande (18), agencé pour faire saillie à l'intérieur du véhicule pour permettre le réglage de l'orientation du boîtier (10) par rapport au support (14) ; et des moyens élastiques (64) pour pousser l'organe de commande (54) vers le boîtier (10), ce qui pousse ainsi chaque saillie venant en contact avec sa bride respective; caractérisé en ce que:

la bague de friction intérieure comporte une paire d'évidements diamétralement opposés, alignés mutuellement (60, 62) dans la surface partant de ladite bride (28) s'étendant vers l'intérieur,

la bague de friction extérieure (32) est agencée pour venir en contact avec la bride s'étendant vers l'extérieur (24) et comporte une paire d'évidements diamétralement opposés, alignés mutuellement (42, 44) dans la surface partant de ladite bride (24),

l'organe de commande (54) comprend des première et seconde saillies (56, 58) agencées pour être poussées par les moyens élastiques (64) dans les évidements respectifs (60, 62) de l'une des bagues de friction (30),

des troisième et quatrième saillies (38, 40) du boîtier (10), sont agencées pour être poussées par les moyens élastiques (64) dans les évidements respectifs (42, 44) de l'autre des bagues de friction (32), et

au moins l'une des surfaces d'engagement mutuel de chaque saillie et de l'évidement correspondant est de section transversale, partiellement cylindrique, orientée de telle façon que, lorsque les saillies (38, 40, 56, 58) sont engagées dans leurs évidements respectifs (42, 44, 60, 62), toutes ces surfaces partiellement cylindriques ont un axe commun perpendiculaire à l'axe de la formation cylindrique (26), de sorte que l'organe de commande (54) et le boîtier (10) sont tous deux simultanément mobiles angulairement, autour dudit axe commun et autour de l'axe de la formation cylindrique (26).

2. Rétroviseur selon la revendication 1, dans lequelle support (14) est accouplé, pour effectuer un mouvement angulaire simultané autour de l'axe de la formation cylindrique (26), à la bague de frictiion (32) dont les évidements (42, 44) sont engagés par les saillies (38, 40) du boîtier de rétroviseur (10).

3. Rétroviseur selon la revendication 1, dans lequel le boîtier de rétroviseur (10) est accouplé, pour effectuer un mouvement angulaire simultané autour de l'axe de la formation cylindrique (26) à la bague de friction (30) dont les évidements (60, 62) sont engangés par les saillies (56, 58) de l'organe de commende (54).

4. Rétroviseur selon la revendication 3, dans lequel la bague de friction intérieure (30) comprend un trou central (48) de section transversale non-circulaire, dans lequel s'engage une formation non-circulaire complémentaire (46) du boîtier (10).

5. Rétroviseur selon l'une quelconque des précédentes revendications, dans lequel les moyens d'accouplement élastique de l'organe de commande (54) au boîtier (10) comprennent une tige (50) fixée au boîtier (10) et faisant saillie au travers de la formation cylindrique (26) et une ouverture dans l'organe de commande (54), avec un ressort de compression (64) s'engageant entre l'organe de commande (54) et une bride (52), à l'extrémité libre de la tige (50).

FIG. 1.

FIG. 2.

FIG. 3.

FIG. 4.